# EUROPEAN PATENT APPLICATION

(11) **EP 3 470 169 A1**
(43) Date of publication of application: **17.04.2019**
(21) Application number: 18196795.1
(22) Date of filing: 26.09.2018
(51) Int. Cl.: B23P 21/00, G01B 5/00, B23Q 39/04, B65G 29/00, B65G 47/90, H05K 13/04, G01D 21/00, G01M 13/00, G01L 5/00, B25J 15/00, H02K 15/00

(54) **DEVICE FOR MOUNTING AND QUALITY CONTROL OF A WORKPIECE**

(30) Priority: 13.10.2017 CZ 20170655
(71) Applicant: VÚTS, a.s., Liberec XI - Ruzodol I 460 01 Liberec (CZ)
(72) Inventor: Fabera, Jaroslav, 460 14 Liberec, Liberec XIV-Ruprechtice (CZ); Havlik, Jaroslav, 460 08 Liberec, Liberec VIII-Dolni Hanychov (CZ); Klepl, Robert, 463 12 Liberec, Liberec XXV-Vesec (CZ); Holat, Evzen, 460 01 Liberec, Liberec I-Stare Mesto (CZ)
(74) Representative: Musil, Dobroslav

(57) **Abstract**

A device for mounting and quality control of a workpiece comprising a handling arm (32) for moving a workpiece between individual work units (4), which comprises a chamber (2) mounted on a frame (1), whereby in the chamber (2) is mounted rotatably a base plate (31) which is provided with at least two handling arms (32) and is coupled to means for its reciprocating swinging movement between two working positions, whereby arranged in the working positions are at least one assembly unit (41) for assembling the workpieces, at least one camera system unit (42) to perform visual inspection of the workpiece and at least one unit (43) to control the strength of the joint of the assembled workpiece.

## Description

### Technical field

The invention relates to a device for mounting and quality control of a workpiece, comprising a handling arm for moving the workpiece between individual work units.

### Background art

Nowadays, the production of a workpiece, such as a lid of a small electric motor, is carried out in such a manner that the operator of the device places all the components of the workpiece in the basic position of the machine where it is automatically assembled and then the assembled workpiece is manually removed by the operator or, if appropriate, optically inspected and submitted to further processing.

A rotary device is known which comprises a handling arm mounted on a rotating base plate by means of which workpieces are moved to individual work units to undergo further processing or the control of the processing quality. By turning the base plate around its axis of rotation, the handling arm is moved to individual working positions, whereby by turning the base plate by 360 degrees, the handling arm is moved to its initial position. The drawback of such a device is that when adjusting the movement of the handling arm between two work units, then it is necessary to adjust the movement of the handling arm between all of the following work units. Another disadvantage of the device is the arrangement and the connection of the cabling to the individual handling arms, where the rotation of the base plate causes twisting of the cables and their subsequent damage.

Inspection of the assembled workpieces is performed only visually or, if needed, sound or vibration tests are conducted, for example, after the assembly of the complete product, but they only reveal/detect a defect in the product and not its cause.

The aim of the invention is to provide a device which performs assembling a workpiece and subsequent control of the quality of its assembly.

### Principle of the invention

The aim of the invention is achieved by a device for mounting a workpiece and controlling the quality of a workpiece according to the present invention, whose principle consists in that it comprises a chamber mounted on a frame, whereby in the chamber is rotatably mounted a base plate which is provided with at least two handling arms and is coupled to means for its reciprocating swinging movement between two working positions, whereby at least one assembly unit for assembling the workpieces is provided in the working positions, as well as at least one camera unit for performing a visual inspection of the workpiece and at least one unit for controlling the joint strength of the assembled workpiece.

Preferably, the handling arm performs a reciprocating movement between two adjacent work positions provided with work units. The number of handling arms and the number of handling units of the device depends on the number of working operations required to assemble and control the workpiece. Both the individual handling arms and the work units are removable and in the event of a repair, servicing or other operations, they can be replaced with replacement arms or units.

Preferably, the handling arm comprises at least one linear drive, for example a pneumatic cylinder, which allows the handling arm to be ejected horizontally and vertically.

Preferably, a gripping unit for gripping a workpiece is mounted at the end of the handling arm, the gripping unit being coupled to another linear drive to ensure the opening and gripping operations.

A joint strength control unit further comprises an insert bearing for receiving a workpiece on one side of which is mounted a sliding plate with a fixation device for fixing the workpiece tested and a measuring device for measuring the position of the workpiece joint, whereas on the other side of the insert bearing is mounted a sliding plate with a pressure device to exert pressure against the workpiece joint.

### Description of drawings

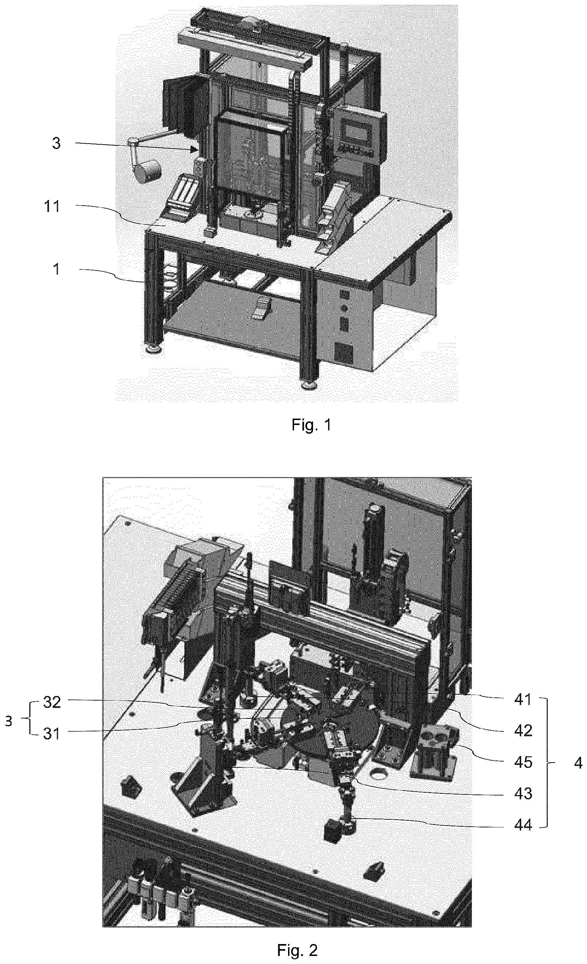

The invention is schematically represented in the drawings, where a device for mounting and control of lids is shown in individual illustrations, wherein Figure 1 is an axonometric view of the whole device and Figure 2 is an axonometric view of the inner part of a chamber in which work units and a base plate with handling arms are mounted.

### Examples of embodiment

The device for mounting and control of lids according to the present invention comprises a supporting frame **1** with a plate **11**, on which is mounted a working chamber **2** made of a transparent material. In the working chamber **2**, work units **4** and a drive unit with a rotary manipulator **3** are mounted on the plate **11**. The drive unit performs a reciprocating swinging movement between the work units **4** or between the working positions unoccupied with the work units **4**.

In this exemplary embodiment, the rotary manipulator **3** is formed by a circular base plate **31** in whose axis of rotation an opening is provided to bring the unillustrated cabling to four handling arms **32** which are arranged on the outer edge of the upper side of the base plate **31**. Each handling arm **32** comprises a radial linear drive and a vertical linear drive, e.g., a pneumatic cylinder, which allows ejecting the extensible portions of the handling arm **32** horizontally and vertically, and a linear drive to ensure the opening and gripping operations of the gripping part mounted at the end of the handling arm **32**.

The plate **11** of the device for mounting and control of lids according to this exemplary embodiment comprises five working positions, occupied by work units **4**. The individual work units **4** are mounted on the plate **11** in a circular arrangement centered on the rotary axis of the base plate **31**, the angular distances between two adjacent work units **4** being the same.

A known assembly unit **41** is mounted in the first working position, joining two parts of the workpiece by pressing one part into the other, for example, by bending the ends of one of the workpieces.

In the second position, a camera system unit **42** is mounted to perform visual inspection to make sure that all the parts of the workpiece have been correctly mounted and correctly pressed into the assembly unit **41**. For example, a Keyence camera system can be used to make mechanical adjustment to the camera sensor in three axes.

The third working position is provided with a joint strength control unit **43** which comprises an insert bearing for inserting a part to be tested which is mounted on the plate and a rail with sliding plates on which are mounted fixation devices for holding the workpiece firmly in the insert bearing, a measuring device for measuring the displacement of the joint and a pressure device for exerting pressure against the joint of the part tested.

In this exemplary embodiment, the fourth working position is only provided with a reserve unit **44** which serves to lay the workpiece aside. This working position may be provided with another testing or production unit which is needed for the further processing or control of the workpiece.

The camera system unit **42** and the joint strength control unit **43** are coupled to unillustrated means for evaluating the production and control process. According to the results from these units, the workpieces are divided into defective workpieces and workpieces without a defect/defects. The fifth working position is then provided with a sorting unit **45** provided with two openings, each coupled to one box, one of the openings being assigned to the workpieces which have no defect/defects and the other opening is assigned to the faulty workpieces.

Hereinafter, an exemplary embodiment of a device for mounting and quality control of a workpiece according to the present invention will be described. The invention will be described by way of example of mounting and testing the lid of a small electric motor. The manipulation arms **32** of the rotary manipulator **3** perform a reciprocating swinging movement between two adjacent work positions provided with work units **4**, i.e. the first handling arm performs a reciprocating movement between the first and second work units, the second manipulating arm performs a reciprocating movement between the second and the third work unit, etc.

The operator of the device inserts the components of the workpiece i.e., the motor lid, two capacitors, two chambers and the motor bearing, into the assembly unit **41** in the first working position. By pressing or stepping on the safety pedal, the safety light curtain is activated and the work process is started. The bearing is pressed into the front of the motor, the capacitors are fastened in their places by bending their inlets and the chambers are pressed into the front of the motor by bending its ends.

The thus assembled motor assembly is then removed from the assembly unit **41** by means of the first handling arm and the rotary manipulator **3** turns towards the second working position. By means of the linear drive system, the handling arm **32** is ejected above the mounting of the second work unit, where the assembled assembly is placed, and then the handling arm **32** is retracted and the manipulator **3** turns back to its first position.

The second work unit consists of a Keyence camera system which controls the correct mounting of all the components of the motor lid and the bending of the connecting elements.

By analogous movement as in moving the assembled assembly from the first work unit to the second work unit, the second handling arm **32** moves the assembly which has been controlled by the camera system from the second working position to the third working position.

In the third position, the joint strength control unit **43** is mounted, whereby an assembled assembly is placed in its insert bearing, being fixed in it by the first pneumatic cylinder. The second pneumatic cylinder then exerts pressure against the chambers pressed into the motor lid, whereby the measuring unit measures the position of the chambers before and after the second pneumatic cylinder is retracted.

Another handling arm **32** of the rotary manipulator **3** moves the assembled electric motor assembly to the next fourth working position which, in this exemplary embodiment, is occupied only by a reserve unit **44** for laying aside the assembled assembly. This fourth working position only serves as a reserve in case it is necessary to add another work unit **4** for further mounting of the workpiece or checking the assembly which has already been assembled.

The assembled assembly is moved by the last handling arm **32** to a control unit **45** which comprises two openings connected to removable containers located at the bottom of the frame **1**. Depending on the previous inspection by the camera system unit **42** and the joint strength control unit **43**, the assembled assembly is inserted either into an opening for the defective pieces or to an opening for well-processed pieces.

The individual work units **4** are removably attached to the plate, for example, by means of a pneumatic or electrical multi-connector, which allows a quick replacement of the work unit **4**, for example, during maintenance, adjustment or repair, thus minimizing the idle time of the device.

Each handling arm **32** is used to move the workpiece between two work units **4**, e.g., the first handling arm **32** moves the workpiece from the first work unit **41** to the second work unit **42**, and then the handling arm **32** returns to the first work unit **41**. The other handling arms **32** mounted on the base plate **31** perform an analogous movement between the other work units **4**, e.g., the second handling arm **32** performs a reciprocating swinging movement between the second work unit **42** and the third work unit **43**, etc.

## Claims

1. A device for mounting and quality control of a workpiece, comprising a handling arm (32) for moving a workpiece between individual work units (4) **characterized in that** it comprises a chamber (2) mounted on a frame (1), whereby in the chamber (2) is mounted a base plate (31) which is provided with at least two manipulating arms (32) and is coupled to means for its reciprocating swinging movement between two working positions, whereby arranged in the working positions are at least one assembly unit (41) for assembling the workpieces, at least one camera system unit (42) for visual inspection of the workpiece and at least one unit (43) for controlling the strength of a joint of the assembled workpiece.

2. The device according to claim 1, **characterized in that** the handling arm (32) comprises at least one linear drive in the horizontal and/or the vertical axis.

3. The device according to claim 1 or 2, **characterized in that** the handling arm (32) is provided with a gripping device.

4. The device according to any of the preceding claims, **characterized in that** the unit (43) for controlling the strength of a joint comprises an insert bearing from whose one side is reversibly displaceably mounted a fixation device for securing the workpiece in the insert bearing and a measuring device for measuring the position of the tested part of the workpiece, whereby a pressure device for exerting pressure against the tested part of the workpiece is reversibly displaceably mounted from the other side of the insert bearing.
